# EUROPÄISCHE PATENTANMELDUNG

(11) **EP 2 481 899 A1**
(43) Veröffentlichungstag der Anmeldung: **01.08.2012**
(21) Anmeldenummer: 12150713.1
(22) Anmeldetag: 11.01.2012
(51) Int. Cl.: F02B 29/04, F28D 9/00

(54) **Wärmetauscher**

(30) Priorität: 27.01.2011 DE 102011003248
(71) Anmelder: Bayerische Motoren Werke Aktiengesellschaft, 80809 München (DE)
(72) Erfinder: Verdoorn, Werner, 82223 Eichenau (DE)

(57) **Zusammenfassung**

Wärmetauscher (1), insbesondere ein Ladeluftkühler für eine Brennkraftmaschine, bestehend aus einem ersten und einem zweiten von einem Gas durchströmbaren Teilwärmetauscher (2, 3), wobei der erste und der zweite Teilwärmetauscher (2, 3) jeweils von zumindest einer ersten und einer zweiten zueinander beabstandeten, von einem Kühlfluid durchströmbaren Wärmetauscherplatte (4, 4', 5, 5') gebildet sind, wobei die erste Wärmetauscherplatte (4) des ersten Teilwärmetauschers (2) und die erste Wärmetauscherplatte (5) des zweiten Teilwärmetauschers (3) und die zweite Wärmetauscherplatte (4') des ersten Teilwärmetauschers (2) und die zweite Wärmetauscherplatte (5') des zweiten Teilwärmetauschers (3) jeweils einstückig ausgebildet sind und der erste und der zweite Teilwärmetauscher (2, 3) mit temperierten Kühlfluiden durchströmbar sind, wobei der erste und der zweite Teilwärmetauscher (2, 3) in einem gemeinsamen, von dem Gas durchströmbaren Gehäuse (6) angeordnet sind, wobei zwischen den Wärmetauscherplatten (4, 4') des ersten Teilwärmetauschers (2) und den Wärmetauscherplatten (5, 5') des zweiten Teilwärmetauschers (3) eine Perforation (7) eingebracht ist. Durch die erfindungsgemäße Ausgestaltung des Wärmetauschers wird der Wirkungsgrad verbessert.

## Beschreibung

Die Erfindung betrifft einen Wärmetauscher mit den Merkmalen aus dem Oberbegriff des Patentanspruchs 1.

Gattungsgemäße Wärmetauscher, insbesondere Ladeluftkühler für eine Brennkraftmaschine eines Fahrzeuges, sind beispielsweise aus der internationalen Patentanmeldung WO 02/090739 A1 oder auch aus der internationalen Patentanmeldung WO 2008/006431 A1 bekannt. Diese Wärmetauscher bzw. Ladeluftkühler zeichnen sich dadurch aus, dass sie zweistufig betreibbar sind. Dies bedeutet, dass sie über eine Hochtemperatur- und eine Niedertemperaturkühlung für ein den Wärmetauscher durchfließendes oder durchströmendes Fluid verfügen. Einströmendes Fluid wird beispielsweise in einer ersten, flüssigkeitsgekühlten Hochtemperaturstufe abgekühlt und weiter in der zweiten, beispielsweise luftgekühlten Niedertemperaturstufe weiter abgekühlt.

Eine Weiterbildung eines gattungsgemäßen, zweistufigen Wärmetauschers ist beispielsweise aus der amerikanischen Offenlegungsschrift US 2005/0274501 A1 bekannt. Dieser Wärmetauscher zeichnet sich dadurch aus, dass in der Hochtemperaturstufe und der Niedertemperaturstufe unterschiedlich viele Wärmeübertrager angeordnet sind mit wiederum unterschiedlichen Oberflächentopographien, zur Verbesserung des Wärmeübergangs zwischen Wärmetauscher und dem durchströmenden Medium, entsprechend der durchströmten Temperaturstufe.

Weiter ist aus der deutschen Offenlegungsschrift DE 10 2008 014 169 A1, von der diese Erfindung ausgeht, ein Wärmetauscher, insbesondere zur Abgaskühlung einer Brennkraftmaschine eines Kraftfahrzeuges bekannt, wobei dieser Wärmetauscher auch als Ladeluftkühler und/oder als Ölkühler und/oder als Kühlmittelkühler eingesetzt werden kann. Dieser Wärmetauscher weist einen ersten Teilwärmetauscher mit zumindest einem ersten Strömungskanal zur Durchströmung mit einem kühlenden Medium und zumindest einem dritten Strömungskanal zur Durchströmung mit einem ersten Kühlmedium auf, sowie einen zumindest zweiten Teilwärmetauscher mit zumindest einem zweiten Strömungskanal zur Durchströmung mit einem kühlenden Medium und zumindest einem vierten Strömungskanal zur Durchströmung mit einem zweiten Kühlmedium, wobei der zumindest erste Strömungskanal und der zumindest zweite Strömungskanal in Strömungsverbindung stehen und der zumindest eine erste Strömungskanal und der zumindest eine zweite Strömungskanal zumindest eine erste spezifische Wärmeübertragungsfläche und zumindest eine zweite spezifische Wärmeübertragungsfläche aufweisen. Dieser Wärmetauscher ist dadurch gekennzeichnet, dass die zweite spezifische Wärmeübertragungsfläche dividiert durch die erste spezifische Wärmeübertragungsfläche einen Quotienten ergibt, wobei der zumindest eine erste Strömungskanal einen größeren Quotienten aufweist als der zumindest eine zweite Strömungskanal.

Auch wenn dieser gattungsbildende Wärmetauscher keine prinzipiellen Nachteile aufweist, liegt der vorliegenden Erfindung die Aufgabe zugrunde, den Wirkungsgrad weiter zu erhöhen.

Diese Aufgabe wird durch das Merkmal im kennzeichnenden Teil des Patentanspruchs 1 gelöst.

Durch die erfindungsgemäße Perforation zwischen den Wärmetauscherplatten des ersten Teilwärmetauschers und den Wärmetauscherplatten des zweiten Teilwärmetauscher wird ein direkter Wärmeübergang von den Wärmetauscherplatten der Hochtemperaturstufe auf die Niedertemperaturstufe verringert, wodurch der Wirkungsgrad des gesamten Wärmetauschers erhöht wird.

Vorteilhafte Weiterbildungen der Erfindung sind in den Unteransprüchen beschrieben.

Im Folgenden ist die Erfindung anhand eines bevorzugten Ausführungsbeispieles in zwei Figuren näher erläutert.
- Fig. 1: zeigt eine Aufsicht auf einen dreidimensional dargestellten Wärmetauscher, bestehend aus einem ersten und einem zweiten Teilwärmetauscher, ohne ein Gehäuse.
- Fig. 2: zeigt einen Schnitt durch den erfindungsgemäßen Wärmetauscher.

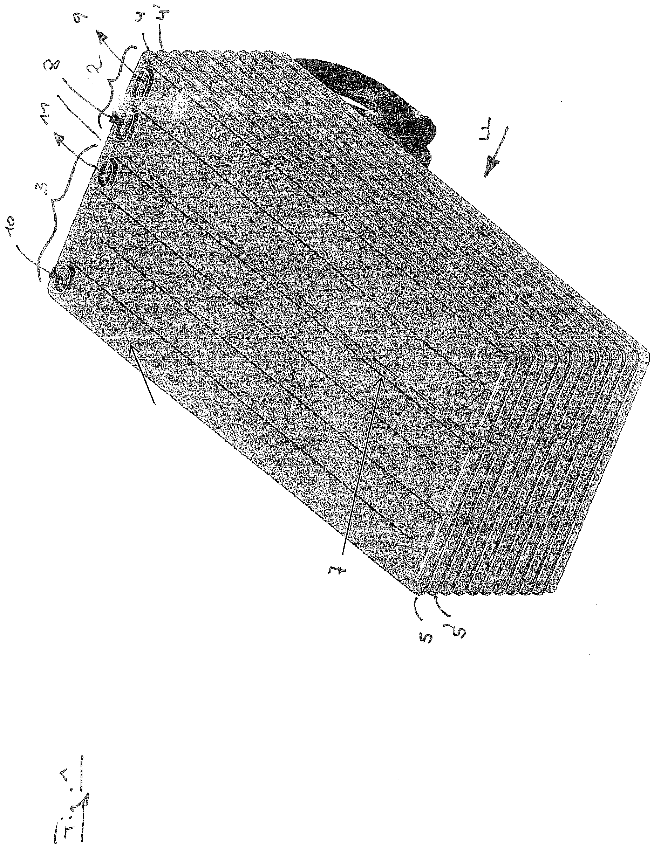

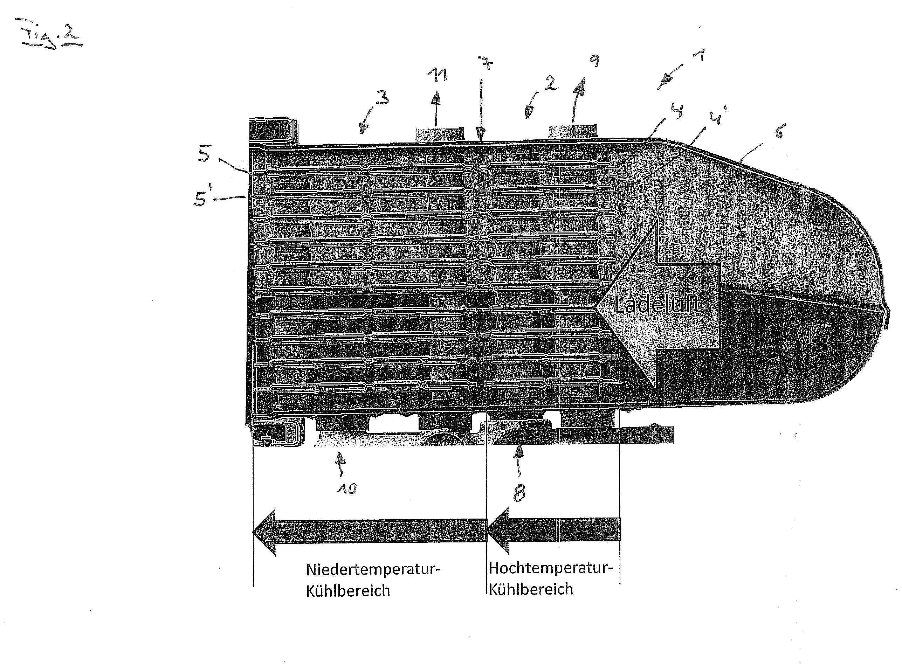

Fig. 1 zeigt die Aufsicht auf einen dreidimensional dargestellten erfindungsgemäßen Wärmetauscher 1, insbesondere einen Ladeluftkühler für eine Brennkraftmaschine, mit einem ersten und einem zweiten von einem Gas durchströmbaren Teilwärmetauscher 2, 3, wobei der erste und der zweite Teilwärmetauscher 2, 3 jeweils von zumindest einer ersten und einer zweiten zueinander beabstandeten, von einem Kühlfluid durchströmbaren Wärmetauscherplatte 4, 4`, 5, 5` gebildet sind. Die erste Wärmetauscherplatte 4 des ersten Teilwärmetauschers 2 und die erste Wärmetauscherplatte 5 des Seitenteilwärmetauschers 3 und die zweite Wärmetauscherplatte 4' des ersten Teilwärmetauschers 2 und die zweite Wärmetauscherplatte 5' des zweiten Teilwärmetauschers 3 sind hierbei jeweils einstückig ausgebildet. Der erste und der zweite Teilwärmetauscher 2, 3 sind mit unterschiedlich oder auch gleich temperierbaren Kühlfluiden durchströmbar, wobei der erste und der zweite Teilwärmetauscher 2, 3 in einem gemeinsamen, in Fig. 2 dargestellten, von dem Gas durchströmbaren Gehäuse 6 angeordnet sind. Dies bedeutet, die Kühlfluide können unterschiedliche Temperaturen, aber auch die gleiche Temperatur aufweisen.

Erfindungsgemäß ist zwischen den Wärmetauscherplatten 4, 4' des ersten Teilwärmetauschers 2 und den Wärmetauscherplatten 5, 5` des zweiten Teilwärmetauschers 3 eine Perforation 7 eingebracht.

In dem in Fig. 1 dargestellten Ausführungsbeispiel weist die Perforation 7 regelmäßige Abstände auf. In einem anderen Ausführungsbeispiel kann die Perforation 7 auch unregelmäßige Abstände aufweisen. Im vorliegenden Ausführungsbeispiel ist die Perforation 7 durch Schlitze gebildet, in wiederum einen anderen Ausführungsbeispiel kann die Perforation 7 auch durch (runde) Löcher gebildet sein. Bevorzugt wird die Perforation 7 durch mechanische Bearbeitung, wie z. B. Bohren, Stanzen, Fräsen oder durch hochenergetische Strahlung, wie beispielsweise Laserbohren, erzeugt.

Im vorliegenden Ausführungsbeispiel weisen die Teilwärmetauscher 2, 3 elf Wärmetauscherplatten 4, 4', 5, 5' auf, diese Anzahl kann aber je nach Anwendungsfall variieren, d. h. sie kann höher oder auch niedriger sein. Darüber hinaus zeigt Fig. 1 einen Kühlfluidzulauf 8 für den ersten Teilwärmetauscher 2 sowie einen Kühlfluidablauf 9 für den ersten Teilwärmetauscher 9. Der zweite Teilwärmetauscher 3 weist einen Kühlfluidzulauf 10 sowie einen Kühlfluidablauf 11 auf. Die Strömungsrichtungen der unterschiedlich temperierten Kühlfluide sind symbolisch durch Pfeile dargestellt. In diesem Ausführungsbeispiel sind die Kühlfluidzuläufe 8, 10 und die Kühlfluidabläufe 9, 11 in einer Ebene angeordnet. In einem anderen Ausführungsbeispiel, wie z. B. in Fig. 2 dargestellt, können die Kühlfluidzuläufe 8, 10 und die Kühlfluidabläufe 9, 11 auch diametral zueinander an den Teilwärmetauschern 2, 3 angeordnet sein. Zwischen den Wärmetauscherplatten 4, 4`, 5, 5` können auch zusätzliche Wärmeübertragungselemente, wie z. B. Finnen, etc. angeordnet sein, um den Wärmefluss zwischen zu kühlendem Fluid und den Wärmetauscherplatten, 4, 4', 5, 5' zu verbessern, d. h. die Kühlung beispielsweise der Ladeluft zu verbessern.

Bevorzugt werden als zur Kühlung Kühlmittelkreisläufe eingesetzt, wobei der erste Teilwärmetauscher 2, der vorzugsweise als Hochtemperaturwärmetauscher ausgebildet ist, beispielsweise mit einem Kühlmittel mit maximal 120° beaufschlagt wird. Der zweite Teilwärmetauscher 3, der dann als ein Niedertemperaturwärmetauscher ausgebildet ist, wird beispielsweise mit einem zweiten Kühlmittelkreislauf beaufschlagt, der eine Vorlauftemperatur von ca. 35°C aufweist. In wiederum anderen Ausführungsbeispielen können auch gasförmige Medien zur Kühlung herangezogen werden. Auch die Kühlung mittels eines Schmiermittels ist möglich.

Eine Strömungsrichtung eines zu kühlenden Fluid, wie beispielsweise einer Ladeluft, ist mit einem Pfeil schematisch dargestellt und mit LL beziffert. In dem vorliegenden Ausführungsbeispiel ist die Perforation in jeder Wärmetauscherplatte 4, 4', 5, 5' vorgesehen, in einem anderen Ausführungsbeispiel kann auch nur beispielsweise jede zweite oder dritte Wärmetauscherplatte perforiert sein, was jedoch den Nachteil hat, dass der Wirkungsgrad entgegen der Erfindung wieder leicht verschlechtert wird.

Fig. 2 zeigt einen Schnitt durch das Gehäuse 6, in dem der erste und der zweite Teilwärmetauscher 2, 3 angeordnet sind. Die Strömungsrichtung des zu kühlenden Fluids, hier der Ladeluft, ist wiederum durch einen Pfeil im Gehäuse 6 symbolisch dargestellt. Unterhalb des ersten und des zweiten Teilwärmetauschers 2, 3 ist ebenfalls mit Pfeilen die Trennung des Wärmetauschers 1 auf den Hochtemperaturkühlbereich und den Niedertemperaturkühlbereich dargestellt.

Durch die erfindungsgemäße Ausgestaltung wird der direkte Wärmefluss vom Hochtemperaturkühlbereich in den Niedertemperaturkühlbereich in den Teilwärmetauschern 2, 3 verringert, wodurch der Gesamtwirkungsgrad des Wärmetauschers 1 vergrößert wird. Selbstverständlich kann die erfindungsgemäße Ausgestaltung auch für Wärmetauscher zum Einsatz kommen, bei denen Abgas gekühlt werden muss, wie beispielsweise bei einem Abgasrückführkühler.

### βezugszeichenliste:

- 1.: Wärmetauscher
- 2.: erster Teilwärmetauscher
- 3.: zweiter Teilwärmetauscher
- 4.: erste Wärmetauscherplatte erster Teilwärmetauscher
- 4': zweite Wärmetauscherplatte erster Teilwärmetauscher
- 5.: erste Wärmetauscherplatte zweiter Teilwärmetauscher
- 5': erste Wärmetauscherplatte zweiter Teilwärmetauscher
- 6.: Gehäuse
- 7.: Perforation
- 8.: Kühlfluidzulauf erster Teilwärmetauscher
- 9.: Kühlfluidablauf erster Teilwärmetauscher
- 10.: Kühlfluidzulauf zweiter Teilwärmetauscher
- 11.: Kühlfluidablauf zweiter Teilwärmetauscher

## Patentansprüche

1. Wärmetauscher (1), insbesondere ein Ladeluftkühler für eine Brennkraftmaschine, bestehend aus einem ersten und einem zweiten von einem Gas durchströmbaren Teilwärmetauscher (2, 3), wobei der erste und der zweite Teilwärmetauscher (2, 3) jeweils von zumindest einer ersten und einer zweiten zueinander beabstandeten, von einem Kühlfluid durchströmbaren Wärmetauscherplatte (4, 4', 5, 5') gebildet sind, wobei die erste Wärmetauscherplatte (4) des ersten Teilwärmetauschers (2) und die erste Wärmetauscherplatte (5) des zweiten Teilwärmetauschers (3) und die zweite Wärmetauscherplatte (4') des ersten Teilwärmetauschers (2) und die zweite Wärmetauscherplatte (5') des zweiten Teilwärmetauschers (3) jeweils einstückig ausgebildet sind und der erste und der zweite Teilwärmetauscher (2, 3) mit temperierten Kühlfluiden durchströmbar sind, wobei der erste und der zweite Teilwärmetauscher (2, 3) in einem gemeinsamen, von dem Gas durchströmbaren Gehäuse (6) angeordnet sind,
**dadurch gekennzeichnet, dass** zwischen den Wärmetauscherplatten (4, 4') des ersten Teilwärmetauschers (2) und den Wärmetauscherplatten (5, 5') des zweiten Teilwärmetauschers (3) eine Perforation (7) eingebracht ist.

2. Wärmetauscher nach Patentanspruch 1,
**dadurch gekennzeichnet, dass** die Perforation (7) einen regelmäßigen oder unregelmäßigen Abstand aufweist.

3. Wärmetauscher nach Patentanspruch 1 oder 2,
**dadurch gekennzeichnet, dass** die Perforation (7) durch Löcher gebildet ist.

4. Wärmetauscher nach Patentanspruch 1 oder 2,
**dadurch gekennzeichnet, dass** die Perforation (7) durch Schlitze gebildet ist.

5. Wärmetauscher nach einem der Patentansprüche 1 bis 4,
**dadurch gekennzeichnet, dass** die Perforation (7) durch mechanische Bearbeitung oder hochenergetische Strahlung erzeugt ist.
